**Europäisches Patentamt**

**European Patent Office**

**Office européen des brevets**

(19)

(11) Numéro de publication: **0 256 051 B1**

## (12) FASCICULE DE BREVET EUROPEEN

(45) Date de publication de fascicule du brevet: **15.04.92**  (51) Int. Cl.⁵: **G03B 7/28**, G03B 7/08

(21) Numéro de dépôt: **87900830.8**

(22) Date de dépôt: **20.01.87**

(86) Numéro de dépôt internationale :
**PCT/FR87/00020**

(87) Numéro de publication internationale :
**WO 87/04530 (30.07.87 87/17)**

(54) **DISPOSITIF DE TRAITEMENT D'IMAGE POUR LE CONTROLE DE LA FONCTION DE TRANSFERT D'UN SYSTEME OPTIOUE.**

(30) Priorité: **20.01.86 FR 8600710**
**04.02.86 FR 8601552**
**26.09.86 FR 8613433**

(43) Date de publication de la demande:
**24.02.88 Bulletin 88/08**

(45) Mention de la délivrance du brevet:
**15.04.92 Bulletin 92/16**

(84) Etats contractants désignés:
**AT BE CH DE FR GB IT LI LU NL SE**

(56) Documents cités:
**FR-A- 2 012 580        FR-A- 2 285 630**
**GB-A- 2 019 628        US-A- 3 724 349**
**US-A- 4 047 187        US-A- 4 303 322**
**US-A- 4 541 704**

(73) Titulaire: **SCANERA S.C.**
**2, rue de Marnes**
**Garches, Hauts-de-Seine(FR)**

(72) Inventeur: **CORNUEJOLS, Georges**
**11, Rue des Soeurs Noires**
**F-Montpellier (Hérault)(FR)**

(74) Mandataire: **CABINET BONNET-THIRION**
**95 Boulevard Beaumarchais**
**F-75003 Paris(FR)**

EP 0 256 051 B1

# Description

La présente invention concerne un dispositif de traitement d'image pour le contrôle de la fonction de transfert d'un système optique et plus particulièrement le contrôle de l'exposition lumineuse d'une surface ou d'un capteur.

La notion de système optique englobe tout appareil de prise, de traitement, de transfert, de restitution d'images.

On connaît actuellement des moyens nombreux et variés pour agir sur la fonction de transfert précitée, on peut citer en premier lieu les obturateurs constitués d'éléments mécaniques, à rideaux ou à lamelles, qui, par déplacement devant la surface à éclairer, laissent passer la lumière pendant une durée déterminée, les paramètres d'exposition, durée, diaphragme et distance de mise au point étant uniformes sur toute la surface de l'image.

Les appareils électroniques de prises de vues, à capteurs optiques matriciels, qui n'ont pas d'obturateur n'effectuent, eux aussi, que des expositions aux paramètres uniformes, sauf, parfois, la vitesse de balayage, pour prendre l'image d'objets cylindriques notamment.

Les obturateurs à écran plat, tel que celui présenté dans le brevet U.S. No. 4,297,018 avec une unité à circuit imprimé pour appareil photographique, n'effectuent, eux aussi, que des expositions aux paramètres uniformes.

Le dispositif d'addition de lumière présenté dans le brevet U.S. 4,541,704, ne fait qu'ajouter après le transfert de l'image, un éclairement sur des régions d'une surface photosensible qui ont été peu exposées, mais ne gère aucun autre paramètre d'exposition.

Les filtres chromatiques connus à ce jour, de type gélatine ou lame partiellement transparente sont immuables et ne permettent pas une adaptation fine du filtrage à l'image.

Plusieurs manipulations de masques, immuables eux aussi, sont nécessaires pour effectuer une incrustation d'image.

Toute surface photosensible et tout capteur optique possèdent une limite dans le rapport des éclairements maximaux et minimaux qu'elle peut traduire sans les confondre avec le noir et le blanc. Cette valeur se lit sur la courbe sensitométrique caractéristique de cette surface. Or l'éclairement des scènes naturelles ou éclairées ponctuellement varie spacialement dans un rapport de valeurs beaucoup plus grand que ce rapport sensitométrique. Une exposition uniforme ne permet donc pas de restituer la scène initiale.

On connaît des intensifieurs de contrastes, tels que celui présenté dans le brevet U.S. N° 3,724,349, mais qui ne permettent pas une gestion de tous les paramètres de prises de vues et ne font que réagir, automatiquement, avec des coefficients de multiplication variables, aux contrastes de l'image initiale.

Certaines surfaces photosensibles, dont l'oeil, peuvent être détériorées par un excès de lumière, même ponctuel. La sécurité de certaines professions et/ou d'appareils onéreux dépend donc de la faculté actuellement inexistante d'abaisser sélectivement les éclairements incidents d'une valeur supérieure à un seuil.

Les diaphragmes connus à ce jour, de type mécaniques à iris réalisant une ouverture variable, ne permettent pas les multiples fonctions de masques à géométrie variable dans le plan du diaphragme.

Tous les dispositifs optiques ont une profondeur de champs finie. Une exposition uniforme en distance de mise au point, provoque donc une limitation de distance entre les points les plus proches et les points les plus éloignés qui peuvent être perçus comme nets. Cette limitation est d'autant plus forte que le diaphragme de l'objectif du dispositif est ouvert.

Les images animées ou projetées souffrent des mêmes défauts.

Des traitements d'images permettent de corriger certains des défauts précités, mais leur maniement est délicat et lent. De plus, certains traitements d'images ne sont pas possibles sur des images chimiques.

Il n'existe pas de compresseur-expanseur (compandeur) agissant sur les éclairements d'une image.

L'objet de la présente invention est de créer un dispositif remédiant à ces défauts.

L'invention propose à cet effet un dispositif de traitement de L'image d'un objet , comportant au moins un capteur d'image organisé selon un premier réseau de points d'image ou pixels, un écran plat de transfert d'image, organisé selon un second réseau de points d'image et un calculateur adapté à générer en fonction d'un signal en provenance du capteur un signal de commande d'état pour chaque pixel de l'écran plat, ledit capteur d'image et ledit écran plat recevant simultanément la lumière en provenance de l'objet, caractérisé en ce que l'image résultant de la transmission de l'image de l'objet à travers l'écran plat ne soit formée que de rayons lumineux issus de l'objet, et modulés par des états de transmittance des pixels dudit écran plat.

La richesse de ce dispositif tient en ce que tous les paramètres spatiaux temporels et optiques de la fonction de transfert du système optique sont contrôlés et plus particulièrement en ce que chaque élément ou chaque région d'une image peut être exposé séparément et indépendamment des autres éléments ou régions, avec des paramètres d'exposition qui lui sont particuliers.

Dans ce dispositif, un ou plusieurs écran plats placés sur le chemin optique des rayons lumineux formant l'image sont asservis à un ou des capteurs photosensibles et/ou aux ordres donnés par un utilisateur et/ou à un calculateur analogique et/ou numérique. Le dispositif contrôle les paramètres et les instants d'exposition de chaque point (pixel) ou de chaque région de l'image indépendamment ou non des autres pixels ou régions.

Il convient de souligner que ce dispositif fonctionne en temps réel au cours du transfert d'une image.

Les principales fonctions du dispositif sont d'augmenter ou de réduire les contrastes lumineux, de modifier l'éclairement et la couleur d'éléments de l'image, de les rendre nets ou flous, de restaurer une image et d'insérer d'autres images ou du texte dans l'image initiale.

Les paramètres d'exposition instantanée locale ou ponctuelie contrôlés par le dispositif peuvent comporter notamment l'instant de début d'exposition, la durée d'exposition, la distance de mise au point, le diaphragme, la focale, l'éclairement d'exposition transmis et la couleur.

Les paramètres d'exposition globale ou uniformes contrôlés par le dispositif peuvent comprendre notamment, le flou de mouvement, le flou de focalisation, la polarisation, les zones de netteté, le contraste, le filtrage, la profondeur de champ, l'incrustation et/ou la superposition d'autres images et/ou de textes, l'éclairement moyen et les régions plus sombres ou plus claires, la couleur dominante et les couleurs plus estompées ou plus vives, le grossissement, le rapport de compression-expansion, le masquage et l'homogénéité du diaphragme.

Les utilisations de la présente invention sont donc nombreuses dans tous les domaines où les conditions d'éclairement doivent être maitrisées.

L'imagerie médicale et certains professionnels, comme les soudeurs, bénéficient, grâce à la présente invention d'une sécurité accrue. Les images spatiales ou de réactions explosives sont plus fines. Certaines scènes actuellement insaisissables peuvent être perçues et restituées, les effets du viellissement d'images corrigés, etc.

Dans le domaine artistique, le créateur peut atténuer ou augmenter localement ou globalement la plupart des contraintes techniques précitées dans le but d'obtenir des effets graphiques ou picturaux en résultant, aussi bien en matière de luminance qu'en matière de chrominance.

Le dispositif objet de l'invention peut s'insérer dans un système de prise, de transfert, de traitement ou de restitution d'images, et plus généralement dans tous les systèmes comportant des éléments d'optiques formant des images comme par exemple les appareils photographiques, les télescopes, les projecteurs, les objectifs, etc ...

Selon l'utilisation, le dispositif peut donc être considéré comme un obturateur, un filtre, un masque, un contretype automatique, un amplificateur de contrastes, un éditeur, un compandeur, ou comme un système de traitement optique, spatial et numérique non stationnaire d'images.

Le dispositif selon l'invention permet notamment de traiter aussi bien une image que la transformée de Fourrier de cette image ou que la fonction de transfert du dispositif.

Le masquage peut être adaptatif ou non.

En reproduisant sur écran plat en négatif ou en positif l'image initiale, le dispositif en réduit ou en augmente les contrastes, respectivement.

Fonctionnant en temps réel, le dispositif peut s'adapter aux images animées.

La gestion par le dispositif de plusieurs images permet la création de fondus enchaînés, et d'effets d'animation traditionnels ou nouveaux, et la segmentation de régions par leurs formes, couleurs, mouvements, et plus généralement par leurs caractéristiques lumineuses.

L'édition, la superposition et l'incrustation de scènes et de textes, peuvent aussi être contrôlées.

En variante, l'utilisateur peut être remplacé par un système expert.

Le dispositif permet aussi de cumuler les qualités de finesse et de définition de l'image analogique, comme par exemple l'image sur support chimique et celles de souplesse, de dynamique et de malléabilité de l'image numérique.

Le dispositif permet d'éliminer avantageusement des composants mécaniques des systèmes optiques actuellement connus.

D'autres objets, avantages et caractéristiques de l'invention ressortiront d'ailleurs de la description qui va suivre, donnée à titre d'exemple, en regard des dessins annexés et donnant à titre explicatif et nullement limitatif plusieurs formes de réalisation et d'application conformes à l'invention telle que revendiquée.

La figure 1 représente le schéma symbolique d'un système optique.

La figure 2 est une vue schématique représentant l'ensemble des éléments qui en combinaison avec un écran plat, constituent un dispositif selon l'invention.

La figure 3 est une vue schématique d'un mode de réalisation de l'invention appliquée à un appareil photographique.

La figure 4 est une vue schématique montrant les différentes connexions des composants du dispositif selon la figure 3.

La figure 5 est une vue d'un clavier du dispositif selon la figure 3.

Les figures 6 et 7 sont des vues schématiques montrant la position relative de l'écran plat par rapport à une surface photosensible confondue avec un capteur.

La figure 8 représente schématiquement un mode de réalisation de l'invention appliqué à des lunettes protectrices.

La figure 9 est une vue schématique d'une application de l'invention à une optique d'objectif.

La figure 10 est une vue schématique d'une application de l'invention à un projecteur de diapositives.

La figure 11 représente une application de l'invention à un dispositif optique à focale variable.

Avant d'aborder la description détaillée des formes de réalisation illustrées à titre d'exemples, il convient de préciser un certain nombre de notions.

On appelle lumière toute onde de type électromagnétique et plus particulièrement les ondes dont la longueur est dans le domaine visible ou en est proche.

On appelle écran plat tout dispositif comportant un ensemble de points dont un facteur optique, par exemple, d'émission, de réflexion, de polarisation, d'absorption, de transmission, de cohérence, local et/ou spatial et/ou temporel, dépend directement ou indirectement, de facteurs extérieurs ou d'apports d'énergie extérieure comme des champs électromagnétiques, des ondes acoustiques ou lumineuses, des courants électriques, des facteurs thermiques, chimiques, mécaniques ou biologiques.

Par exemple, un écran plat peut être un téléviseur à tube cathodique, un écran à cristaux liquides, un composant électronique moléculaire comportant de la rhodopsine, un système électrophorétique, une céramique notamment ferroélectrique ou de type PLZT, c'est-à-dire à base de Plomb, Lanthane, Zirconate, Titanate, un écran plat à base de polymères conducteurs, une association de fibres optiques, un dispositif acousto-optique, certains hologrammes.

Il convient de noter que l'expression "écran plat" englobe en réalité tout dispositif du genre ci-dessus défini, sans que l'ensemble de points qui le constitue se situe nécessairement sur un plan ; cet ensemble de points peut se situer sur une surface courbe, voire occuper un volume.

On appelle capteur photosensible tout dispositif comportant un ou des composants fixes ou mobiles dont une des caractéristiques physiques varie en fonction de la lumière qu'il reçoit, ou qui émet un signal ou une énergie dépendant de la lumière incidente.

Par exemple sont des capteurs photosensibles les caméras vidéo, les capteurs optiques à transfert de charges, à sommation ou non, plus connus sous le nom de CCD ou Charge Coupled Device, les photorésistances, les phototransistors, les photodiodes, les transistors amorphes, et généralement les composants présentant un effet optophysique.

On appelle image un champ à support fini de scalaires, au sens mathématique du terme, et plus particulièrement toute représentation d'une fonction d'ondes. On appelle région de l'image tout sous-ensemble de l'image.

On appelle contraste d'une région d'une image le rapport des valeurs maximales et minimales des scalaires, et plus particulièrement des éclairements, luminances et chrominances, de la région de l'image.

Il convient de préciser que le terme "objectif" englobe les lentilles, loupes, lentilles relais, lentilles de champ, condenseurs, et plus généralement tout système optique, destiné à former ou à transférer une image.

On appelle calculateur tout dispositif qui effectue une application (au sens mathématique) d'un champ de scalaires dans un autre ; les scalaires étant couramment représentés par des signaux électriques, il s'agira en général de dispositifs à amplificateurs opérationnels, et à microprocesseurs.

Les marques et références citées dans cette description ne sont données que dans le but d'assurer une meilleure compréhension de l'invention, mais ne sauraient préjuger du choix finalement effectué d'éléments ou de circuits analogues capables d'assurer les mêmes fonctions.

Dans toutes les figures, sauf indication contraire, les rayons lumineux, non représentés, se déplacent de gauche à droite et, après réflexion, de bas en haut.

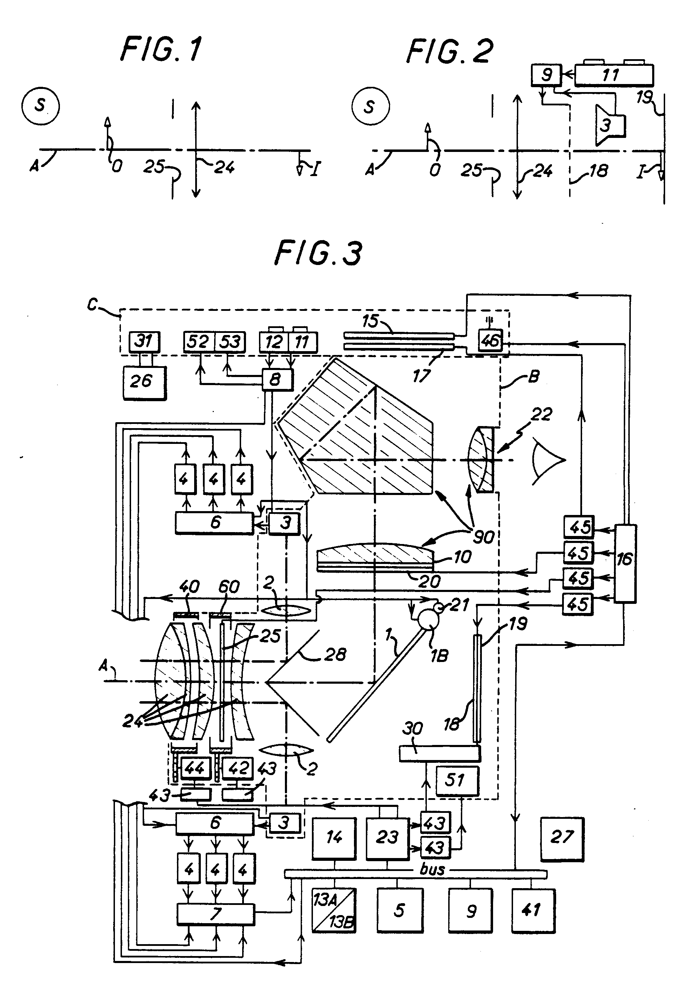

La figure 1 évoque les éléments essentiels d'un système optique. Une source lumineuse S éclaire un objet O ; un diaphragme 25 et une optique 24 forment une image I de l'objet O ceci selon un axe optique A.

Les éléments caractéristiques d'un système optique sont ainsi la source lumineuse, l'objet, les éléments optiques et l'image. Selon les versions du dispositif que l'on va décrire, l'écran plat pourra constituer un quelconque de ces éléments ou un capteur photosensible, ou encore s'intercaler entre deux quelconques de ces éléments.

Dans la figure 2, on trouve, outre les éléments précédents, un capteur photosensible 3, un écran plat 18, en association avec un calculateur 9, un clavier 11 et une surface 19 sur laquelle se forme l'image I de l'objet O. Les positions respectives du diaphragme 25, de l'optique 24, du capteur 3 et de l'écran plat 18 sur le chemin optique des rayons lumineux pourront varier selon les applications comme il ressortira des exemples décrits ci-après.

Le capteur 3 et l'écran plat 18 sont placés de telle manière qu'ils reçoivent sur leur surface une image de l'objet O.

Le capteur 3 est organisé en un premier réseau d'éléments percevant des éléments d'image ou pixels.

L'écran plat 18 est organisé en un second réseau d'éléments à transmittance ou à réflectance variables en fonction du signal qui leur est transmis.

La réalisation de telles organisations relève de technique connues.

Il convient de préciser que le terme pixel englobe aussi bien les éléments d'images transmises par le système optique que les éléments du capteur 3 et que les éléments de l'écran plat 18.

Le calculateur 9 est adapté à traiter des signaux représentatifs d'au moins un paramètre des éléments d'images perçus par chaque pixel du capteur 3 et à fournir un signal de commande de l'état de chaque pixel de l'écran plat 18.

Cependant les réseaux et leur nombre d'éléments peuvent ne pas être en correspondance optique, et en particulier ne pas être conjugués avec l'objet O. En effet, les réseaux et les positions de ces composants varient selon les paramètres optiques à saisir par le capteur 3 et selon les paramètres optiques à traiter par l'écran plat 18.

Dans les figures 3 à 5, on a représenté les principaux composants électroniques de ce premier mode de réalisation, à l'exception des circuits analogiques d'amplification des signaux, qui sont prévus de manière connue en soi partout où c'est nécessaire.

La figure 3 présente un dispositif selon l'invention intégré à un appareil photographique à visée reflex de type connu.

Un boîtier B étanche à la lumière (représenté en pointillé figure 3) comporte à son intérieur un objectif 24 de genre connu, muni d'une bague 40 de mise au point, d'une bague 60 de variation de la distance focale, un diaphragme 25 constitué par un écran plat passif transmissif, un miroir biface semi-réfléchissant 28, un miroir amovible 1 comportant un dispositif de déplacement 1B, une surface à impressionner 19, un verre dépoli 10, un système de dioptres 90, un viseur 22.

En général, le verre dépoli 10 est confondu avec le premier dioptre 90 du système optique de visée reflex dont la face avant est dépolie.

De part et d'autre du miroir biface 28 sont disposées deux lentilles 2 respectivement associées à deux capteurs photosensibles 3.

Le boîtier B comporte en outre les écrans plats passifs transmissifs suivants : un écran plat 18 placé devant la surface à impressionner 19, un écran plat 20 placé devant le verre dépoli 10.

Une source lumineuse 21 est adaptée à éclairer les écrans plats 18 et 20.

Un moteur 30 de déplacement selon l'axe optique de l'écran plat 18, deux moteurs 42 et 44 de rotations des bagues 60 et 40 respectivement, ainsi qu'un moteur 51 de déplacement longitudinal et latéral et de rotation de la surface photosensible 19 sont également intégrés au boitier B.

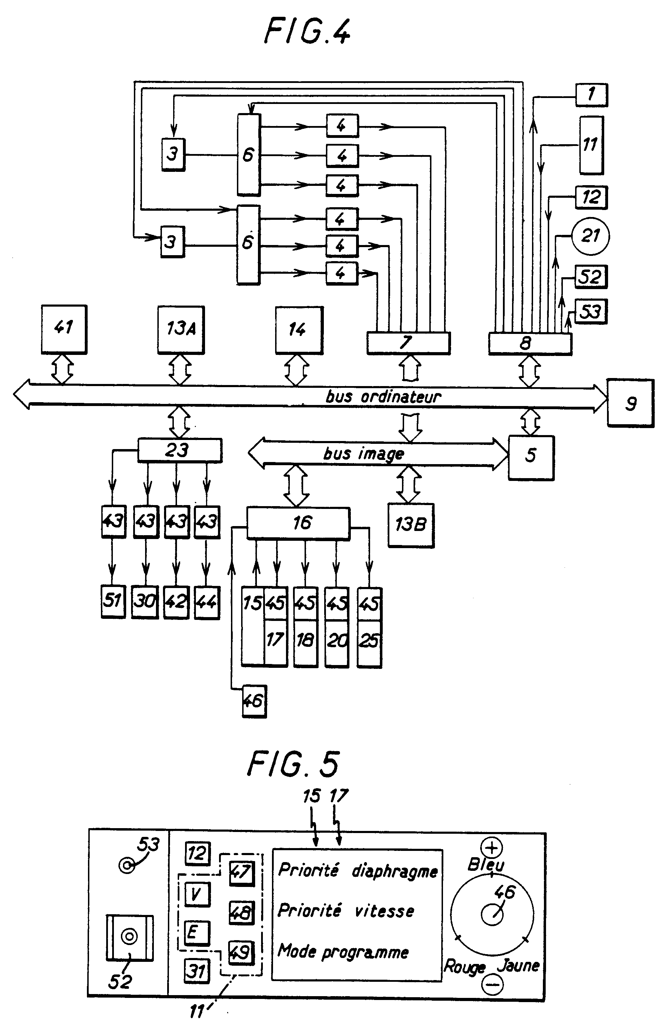

Sur une face C supérieure du boîtier B sont disposés un déclencheur 12, un clavier 11, une manette 46, un interrupteur général 31, un écran plat réflectif 17, un écran tactile 15, le sabot 52 du flash, et la prise 53 de synchronisation de flash (figure 5) accessible par l'utilisateur.

Les éléments électroniques représentés à l'extérieur du boîtier B et de la face C sont en fait incorporés dans un boîtier d'accessoires non représenté, relié électriquement par un connecteur électrique et mécaniquement par des connexions mécaniques (non représentées).

Le boîtier d'accessoire est accolé sur une face inférieure du boîtier B et comporte un processeur de commande 9, un processeur 5 spécialisé en traitement d'images, des mémoires vives 13A, 13B et mortes 14, un générateur de relais 41, des moyens d'analyse et de commandes constitués par les interfaces suivantes.

L'interface d'entrée des images est constituée d'interfaces de contrôles 6 respectivement reliées aux capteurs photosensibles 3, de convertisseurs analogiques-numériques 4 et d'un contrôleur 7 d'accès direct à la mémoire, lui-même connecté au processeur 5.

L'interface d'entrée des ordres de l'utilisateur est constituée d'un circuit 8 d'interfaces parallèles connecté d'une part au clavier 11 et au déclencheur 12 et, d'autre part, au processeur de commande 9, et d'un contrôleur d'écran graphique 16 relié d'une part à l'écran tactile 15 et à la manette 46, et, d'autre part, au processeur 5.

L'interface de sortie des images est constituée du contrôleur d'écran graphique 16, connectée, d'une part, au processeur 5 et, d'autre part, à des circuits 45 de commande et de contrôle des écrans plats 17, 18, 20 et 25.

L'interface de sortie des commandes est constituée de circuits 8 et 23 d'interfaces parallèles connectées au processeur de commande 9.

Le circuit 8 d'interfaces parallèles est aussi connecté, au dispositif de déplacement 1B du miroir amovible 1, à la source lumineuse 21, à un sabot de flash 52 et à une prise de synchronisation du flash 53.

Le circuit 23 d'interfaces parallèles est connecté, par ailleurs, à des circuits de pilotage 43 de moteurs pas à pas 30, 42, 44, 51.

Dans ce premier mode de réalisation du dispositif (figure 3) l'écran plat 18 est proche de la surface 19, ici photosensible, sur laquelle se forme une image I en cours d'exposition.

Les capteurs photosensibles 3 sont des capteurs optiques matriciels de type à transfert de charges, par exemple de la marque "FAIRCHILD".

Les écrans plats 18, 20, 25 sont de type :
- passifs : c'est à dire qu'ils n'émettent pas de lumière
- transmissifs
- à matrices actives : c'est à dire que chaque point de l'écran plat conserve son état pendant toute la durée du balayage,
- et fonctionnant en couleur tels que les écrans graphiques à cristaux liquides (full dot matrix LCD) ceux de la marque "SEIKOSHA", utilisés notamment dans les téléviseurs de poche.

L'écran plat 17 est passif, réflexif, à matrice active et fonctionne en couleur.

Lorsque le miroir 1 est en position basse (figure 3), il réfléchit les rayons issus de l'objectif vers le viseur 22. Sur le verre dépoli 10 du viseur se forme alors une image qui est analogue à l'image formée au déclenchement sur la surface photosensible 19, et les dioptres 90 renvoient l'image I vers l'oeil d'un utilisateur. En position haute (non représentée), ce miroir 1, est écarté du chemin optique des rayons lumineux qui forment alors l'image sur la surface photosensible 19.

La partie électronique est architecturée autour du bus du microprocesseur de commande 9 appelé bus ordinateur. Ce bus est relié à des mémoires vives 13A et mortes 14, à un générateur de délai 41, au processeur 5 spécialisé en traitement d'image, ainsi qu'à deux périphériques respectivement d'entrée et de sortie des commandes.

Le périphérique d'entrée des commandes est constitué d'un clavier 11, d'un déclencheur 12, d'un interrupteur général 31, d'une manette 46 et de type pour dispositif à télécommande et d'un écran tactile 15 transparent recouvrant un écran plat 17 (figure 5). Ces éléments sont accessibles de l'extérieur du boîtier de l'appareil de prise de vues, de telle manière que l'utilisateur puisse commander le fonctionnement du dispositif manuellement. Un contrôleur d'écran graphique 16 transfère les informations qu'il lit sur l'écran tactile 15 et sur la manette 46 vers le bus image 5 du dispositif. Le clavier 11 et le déclencheur 12 sont lus par un circuit d'interfaces parallèles 8 qui est relié au bus ordinateur 9. Un interrupteur général 31 est placé sur des conducteurs électriques reliant une alimentation électrique 26 au dispositif, et commande la mise en marche et l'arrêt du dispositif.

Le périphérique de sortie de commandes est constitué de plusieurs mécanismes d'asservissement. Les déplacements d'optiques de mise au point 40 et de variation de la distance focale 60, le moteur de déplacement longitudinal 30 de l'écran plat 18, le moteur de déplacement 51 de la surface photosensible 19, sont asservis grâce à un circuit d'interfaces parallèles 23 et à des circuits de pilotage 43.

Des dispositifs d'asservissement 44 de la bague de mise au point 40, 42 de la bague de distance focale 60 et 30 de la distance de l'écran plat 18 à la surface photosensible 19 sont des moteurs électriques pas à pas contrôlés par les circuits 43 de pilotage de moteurs pas à pas.

Les mises en marche du capteur optique matriciel 3 et de son interface de commande et de sortie 4, l'allumage d'une source lumineuse 21, les courants électriques véhiculés par les contacts de la griffe de flash 52 et de la prise de synchronisation de flash 53, et le déplacement du miroir 1 sont asservis au processeur de commande 9 par le circuit d'interfaces parallèles 8.

Un périphérique, d'entrée des informations, est destiné à recueillir une image initiale et à l'introduire dans la mémoire vive 13B du disposif.

Le miroir biface semiréfléchissant 28 est placé entre l'objectif et le miroir 1, et est centré sur l'axe optique A de l'appareil, et réfléchit une partie de la lumière qu'il reçoit vers des lentilles optiques 2 qui forment sur des capteurs optiques matriciels 3 des images homothétiques à celle que recevra, au déclenchement, la surface photosensible 19. La lumière transmise par ce miroir 28 poursuit son parcours rectiligne vers le miroir 1.

Les éclairements ponctuels reçus par le capteur 3 sont transformés en charges électriques qui sont réparties en signaux rouges, verts et bleus par des interfaces de contrôle 6, numérisés ensuite par des convertisseurs analogiques-numériques 4. Un port de sortie des convertisseurs 4 est relié à un contrôleur d'accès direct à la mémoire 7 qui place ces informations numériques dans la mémoire vive 13B du dispositif, par l'intermédiaire du bus du processeur d'image 5 confondu sur la figure 3 avec le bus du processeur de commande 9.

Un périphérique de calcul et d'affichage est architecturé autour du bus du processeur spécialisé en traitement d'images 5. Ce bus, dit bus image fonctionne en temps réel et véhicule, entre autres, les images issues du périphérique d'entrée des informations et des images stockées dans la mémoire vive 13B. Après traitement par le processeur spécialisé 5, le périphérique effectue la transmission des données aux écrans plats 17, 18, 20, 25 à partir du bus du microprocesseur 5, par l'intermédiaire du contrôleur d'écran graphique vidéo 16 qui contrôle les circuits 45 de commande des écrans plats, lesdits circuits de commande 45 comportant des convertisseurs numériques analogiques. Ce contrôleur 16 assure, entre autres, des fonctions de démultiplexage, de génération de caractères et de registre à décalage. L'écran plat négatif 18 (opaque au repos) se trouve devant la surface à impressionner 19. L'écran plat positif 20 (transparent au repos) éclairé par transparence par la source de lumière 21, est placé dans le viseur réflex 22, au contact du verre dépoli 10, entre celui-ci et le miroir de visée réflex 1. L'écran plat 17 est placé sur le dessus de l'appareil photographique, juste au-dessus du viseur. L'écran plat 25 sert de diaphragme et de masque étant placé dans un plan diaphragme de l'objectif 24.

L'alimentation électrique 26 fournit à chaque composant électronique l'énergie nécessaire à son fonctionnement. Des horloges 27 rythment l'activité synchronisée du processeur, des interfaces et des périphériques. Cependant, pour sauvegarder la lisibilité des figures 3 à 5, les liens relationnels unissant l'alimentation 26, les horloges 27, d'une part, et les divers composants du système, d'autre part, n'ont pas été symbolisés, étant connus en soi.

Le processeur 5 connecté au bus du processeur de commande 9 effectue diverses opérations comme des convolutions spatiales, des inversions, des sommes, multiplications, des traitements d'images et des transformations de type Fourrier sur les matrices d'informations représentant les images contenues dans la mémoire vive 13B du dispositif.

Le processeur 9 commande le fonctionnement de toutes les interfaces du dispositif selon le programme placé dans la mémoire morte 14 et selon les ordres donnés par l'utilisateur. Ces fonctions sont présentées plus loin avec l'étude des divers modes de fonctionnement du dispositif.

Le processeur 9 comporte un programme dit système expert avec un moteur d'interférence qui traite les bases de données placées dans les mémoires vives 13A et 13B avec une base de connaissance placée dans la mémoire morte 14.

Le générateur de délais 41, effectue des temporisations qui servent pour la génération des durées d'états stationnaires des pixels des écrans plats.

La mémoire vive 13B contient au moins neuf images, les images codées en rouge, vert et bleu provenant de chacun des capteurs 3, une image de contrastes, une de distance et au moins une d'ordres donnés par l'utilisateur sur l'écran tactile 15.

Les axes de polarisation des polariseurs des écrans plats 18, 20, et 25 se correspondent de manière à laisser passer un maximum de lumière vers le viseur et vers la surface photosensible 19. Pour ne pas influencer le coefficient de transmission de l'éclairement de la lumière polarisée venant notamment du ciel ou d'une réflexion, l'axe de polarisation du polariseur avant de l'écran diaphragme 25 est incliné par rapport au plan défini par l'axe optique brisé A. Les polariseurs avant des écrans plats 18 et 20, recevant la lumière issue du diaphragme 25, ont le même axe de polarisation que le polariseur arrière de ce diaphragme 25 de manière à assurer une absorption minimale.

La figure 4 représente un schéma de connexion des composants électroniques ou électromécaniques. Les bus des processeurs 5, bus image, et du processeur 9, bus ordinateur, sont représentés ainsi que les périphériques, et les interfaces.

Le port d'entrée de chaque composant des périphériques est relié au port de sortie du composant qui le précède dans le cheminement ci-dessus décrit des données dans les périphériques.

La figure 5 représente la face supérieure C du boîtier B comportant la prise de synchronisation 53 du flash, le sabot 52 du flash, le déclencheur 12, l'interrupteur général 31, la manette 46, l'écran tactile 15 superposé à l'écran plat 17 et le clavier 11 possédant cinq touches. Trois touches 47, 48 et 49 du clavier 11 sont situées en regard de l'écran tactile 15 transparent superposé à l'écran plat 17 et servent à sélectionner les messages apparaissant sur l'écran plat 17.

Sur la figure 5, les messages inscrits sur l'écran plat 17 sont, pour donner un exemple "priorité vitesse", "priorité diaphragme", et "mode programme" et correspondent au choix du mode automatique ou semi automatique de fonctionnement du dispositif et de l'appareil de prise de vues (les messages peuvent aussi être écrits dans le viseur 22 sur l'écran plat 20).

Les deux autres touches du clavier 11, V et E, ont respectivement les fonctions de validation et annulation de la sélection effectuée précédemment entre les trois autres touches 47, 48 et 49.

L'écran tactile 15 sert à sélectionner du doigt la ou les régions de l'image (non représentée) affichée par l'écran 17, analogue à l'image perçue par les capteurs 3, sur lesquelles on désire effectuer une opération ou un traitement.

Ce clavier 11 possède de plus une manette 46 du type utilisé en télécommande avec deux axes de rotation perpendiculaires qui permettent de sélectionner une couleur sur le cercle (figure 5) de représentation des couleurs réalisé à partir des trois couleurs fondamentales. Un axe d'inclinaison de la manette désigne une couleur, mélange de trois couleurs fondamentales. Un angle d'inclinaison de la manette indique une intensité de la dite couleur.

La manette 46 permet, en outre, de faire augmenter ou diminuer la valeur d'un coefficient (non représenté) affiché sur l'écran plat 17 par inclinaison d'angle plus ou moins important vers des signes " + " et "-" respectivement inscrits sur la face C.

Nous allons maintenant décrire des modes de fonctionnement du dispositif.

Un programme mis en mémoire morte 14 du dispositif est tel qu'il permet un fonctionnement conforme à la description qui va suivre. Tous les ordres donnés par l'utilisteur sont transmis par la face C représentée figure 5.

Il convient de préciser que l'utilisateur peut être un autre dispositif ou un système expert tel que celui placé en mémoire morte 14 du dispositif comportant un moteur d'inférence et une base de connaissance.

En actionnant l'interrupteur général, l'utilisateur met l'ensemble des composants électroniques sous tension, et initialise le programme. Le processeur 9 attend une instruction, même une instruction de déclenchement immédiat, avant de commander une mémorisation continuelle de l'image captée par le capteur 3 et de l'image traitée par le processeur spécialisé 5.

L'utilisateur compose alors son image et choisit un mode d'exposition. Il peut imposer une vitesse, un diaphragme et une distance de mise au point uniforme sur toute la surface photosensible à exposer, en mode manuel, le dispositif ne servant alors que d'obturateur classique.

L'utilisateur peut aussi souhaiter une aide au réglage de ces paramètres uniformes. Le dispositif effectue alors des mesures des éclairements reçus par le capteur 3 sur toute la scène ou séparément sur chacune de ses parties. Il affiche une vitesse et un diaphragme recommandés sur l'écran plat 20 placé dans le viseur 22.

Des modes semi-automatiques à priorité vitesse ou à priorité diaphragme ou un mode automatique, parfois nommé mode programme fonctionnent de la même manière mais le dispositif effectue de plus un réglage de paramètres d'exposition au moment du déclenchement.

Pour les modes de fonctionnement ci-dessus décrits, on peut valablement se reporter à ceux de nombreux appareils photographiques connus tels que le "NIKON FM" ou le "MINOLTA 7000"

Si l'utilisateur désire éclaircir ou assombrir une région de l'image, il sélectionne manuellement sur l'écran tactile 15 cette région située en regard de la région de l'image affichée alors sur l'écran plat 17. L'utilisateur donne ensuite un coefficient d'éclaircissement positif ou négatif. Une inclinaison de la manette 46 vers les signes "+" et "-" fait augmenter ou diminuer respectivement la valeur d'un coefficient affichée sur l'écran plat 17. Le processeur 9 donne l'ordre au contrôleur d'écran graphique 16 d'exposer cette région plus ou moins intensément par augmentation ou diminution respectivement du coefficient de transmission des pixels de la région correspondante de l'écran plat 18 (filtrage monochromatique).

De même, si l'utilisateur désire modifier les couleurs d'une région de l'image, il sélectionne cette région et l'affecte d'un coefficient positif ou négatif ou d'une couleur par l'emploi de l'écran tactile 15 et de la manette 46, de la même manière que décrit ci-dessus.

Un coefficient négatif correspondant au coefficient opposé affectant la couleur opposée sur le cercle de représentation des couleurs, le processeur 9 donne alors au processeur 5 l'ordre de multiplier par le coefficient les couleurs initiales ou d'additionner la couleur sélectionnée en mémoire vive 13B puis d'afficher, au déclenchement, ces couleurs sur la région de l'écran plat 18 correspondant à la région sélectionnée, de telle manière que chaque pixel de cet écran plat devient un filtre chromatique.

Cependant l'utilisateur peut souhaiter, dans le cas de contre-jour, par exemple, diminuer les contrastes lumineux ou les augmenter.

Une diminution de contrastes de luminance est obtenue par la variation des durées d'exposition ou des valeurs de diaphragmes d'exposition pour chaque point en fonction décroissante ou croissante respectivement des éclairements de chaque point. L'augmentation de contrastes est obtenue par des fonctions de monotonie opposée. Une partie fortement éclairée de l'image subit une exposition d'une durée plus courte ou d'une valeur de diaphragme plus élevée ou d'un filtrage monochrome plus opaque qu'une partie faiblement éclairée. En utilisant la matrice des luminances ou la matrice des inverses des luminances calculée par le processeur 5, le processeur 9 pourra commander ces différences locales en cours d'exposition. Les fonctions croissantes du diaphragme par rapport à l'intensité lumineuse incidente ou décroissante de la durée d'exposition par rapport à cette intensité ne seront pas obligatoirement linéaires, mais pourront dépendre de la courbe sensitométrique de la surface à exposer et de l'histogramme des luminances.

Une fonction analogue d'augmentation ou de diminution des contrastes de chrominance est obtenue en analysant l'histogramme de chrominance de façon analogue et en faisant varier les filtrages polychromes des pixels de l'écran plat 18.

Toute la souplesse du dispositif tient, nous l'avons dit, en ce que chaque élément de la surface 19 peut être exposé individuellement. Ses performances sont donc étroitement liées aux dimensions des matrices d'écran plat utilisées et à leur mode d'entrée dans la mémoire 13 du dispositif et à leur mode de sortie de cette mémoire.

Dans le cas du premier mode de réalisation (figures 3 et 4), l'entrée des images issues du périphérique d'entrée de données dans la mémoire vive 13 se fait point par point pendant que défilent des adresses de ces points. Par contre, leur sortie vers le registre à décalage contenu dans le contrôleur 16 se fait soit de même manière que précédemment, soit dans l'ordre décroissant du poids des informations binaires, ou bits, puisque ce poids correspond à des paramètres d'intensité d'exposition, durée, filtrage ou diaphragme, uniformes sur la surface. Le processeur 5 sort donc les bits de poids le plus fort de tous les points de l'écran plat 18 en premier. Puis, au cours des balayages suivants de l'écran plat 18, les bits de poids moindre, dans l'ordre décroissant de ceux-ci. En effet, chacun des ensembles de bits de même poids, correspond à une intensité d'exposition uniforme et c'est l'addition de ces expositions successives qui différencie les intensités d'expositions ponctuelles. Si, par exemple, seule la durée d'exposition varie, et que le bit de poids fort à l'état 1 correspond à une durée d'exposition d'un trentième de seconde, le bit de poids moitié correspondra à une durée d'exposition d'un soixantième de seconde et ainsi, de moitié en moitié jusqu'au bit de poids le plus faible.

Le temporisateur 41 permet de générer ces durées.

On peut obtenir le même effet de variation de la lumination des points de la surface photosensible 19 au cours de l'exposition en diminuant progressivement le diaphragme ou le coefficient de transmission des pixels de l'écran plat d'une demi-valeur, la vitesse de chacune des expositions étant fixe ainsi que le filtrage, c'est à dire le coefficient de transmission de l'écran plat, entre les différentes sous-expositions.

Après le mode d'exposition, l'utilisateur choisit un mode de mise au point de l'image.

Il peut effectuer manuellement la mise au point en agissant sur la bague de mise au point 40 de l'objectif 24.

Il peut suivre la variation de l'action de cette bague sur la netteté dans le viseur mais souhaiter une accentuation de cette information visuelle.

Le dispositif calcule et affiche alors l'image des contrastes et des distances des objets se trouvant dans le champ. Une convolution spatiale détermine des contrastes locaux. On démontre mathématiquement que la distance de mise au point optimale pour un objet placé dans le champ correspond à un extremum de contraste local : maximum pour ses contours et minimum pour sa surface. Or cette distance de mise au point optimale n'est autre que la distance de l'objet au centre de l'objectif de prise de vues. Pour chaque point de l'image la détermination du maximum de contrastes en fonction de la distance de mise au point du système optique fournit la distance du point objet auquel il est conjugué. Pour certains points placés sur une surface uniforme la variation du contraste n'est pas significative. Dans ce cas la comparaison angulaire des deux images reçues par les capteurs 3, fournies par l'objectif 24 qui se décomposent, grâce au miroir biface 28, en deux demi objectifs, d'axe optique parallèle, donne la distance de ces points.

L'opération de convolution fournit donc la distance des contours des objets, et l'opération de comparaison angulaire fournit la distance des surfaces des objets.

L'utilisateur peut demander une mise au point automatique en indiquant, ou non, sur l'écran tactile 15, la région qu'il souhaite voir nette. Dans ce cas, le dispositif effectue automatiquement la fonction précédente, en faisant varier la distance de mise au point grâce à l'asservissement 44 et mémorise les distances calculées. En les comparant aux ordres donnés par l'utilisateur ou par un programme d'optimisation, le dispositif choisit une distance.

L'utilisateur peut également souhaiter une augmentation ou une réduction de la profondeur de champ sur certaines régions de l'image. Le dispositif effectue alors la même opération que celle décrite dans le paragraphe précédent mais, au cours de l'exposition, il fait varier la distance de mise au point, et ouvre les éléments de l'écran plat 18 au moment, point souhaité net, ou en décalage contrôlé, point souhaité plus ou moins flou, de la mise au point optimale. En parcourant ainsi toute la plage de variation de distances possibles, on peut obtenir une profondeur de champ allant de la distance minimale de mise au point de l'objectif à l'infini.

L'utilisateur peut souhaiter une variation de la focale au cours de la prise de vue. S'il donne cet ordre et les paramètres de cette variation de focale et des régions de l'image correspondant aux diverses focale, le processeur 9 ordonne au cours de la prise de vue la transmission des pixels de l'écran plat 18 en fonction de la distance focale de l'objectif qui lui est asservi par la commande du moteur pas à pas 42.

L'utilisateur peut souhaiter jouer indépendamment d'un part, sur l'ouverture du diaphragme 25 et, d'autre part, sur la profondeur de champ et sur le contraste de l'image. L'ouverture correspond à la transmittance moyenne de l'objectif, tandis que la profondeur de champ et le contraste correspondent à la répartition spatiale des transmittances sur l'écran-diaphragme 25. Pour faire varier l'ouverture du diaphragme sans modifier les autres paramètres ci-dessus mentionnés, le processeur 9 commande une multiplication de coefficient spatialement uniforme de la transmittance de chaque pixel de l'écran plat-diaphragme 25. Pour faire augmenter la profondeur de champ uniquement, le processeur 9 commande, sans variation de la transmittance moyenne de l'écran plat 25 une uniformisation de la transmittance des pixels en fonction de leur transmittance initiale. La diminution de la profondeur de champ se fait inversement, par une accentuation des différences des transmittances des pixels en fonction de leur transmittance initiale.

Pour faire augmenter le contraste uniquement, le processeur commande, sans variation de la moyenne des transmittances,le déplacement centrifuge des valeurs des transmittances des pixels et la réduction des transmittances des points les plus proches de l'axe optique. Pour faire diminuer le contraste, inversement, les valeurs transmittances des pixels varieront par décroissance des distances de ces valeurs à l'axe optique.

Pour sélectionner sur ordre de l'utilisateur les fréquences spatiales transmises par l'objectif 24, l'écran plat-diaphragme 25 prend les formes de filtre passe haut (onde opaque ou centre de l'écran plat transparent) passe bas (cercle transparent au centre de l'écran plat opaque) ou passe bande (combinaison des deux formes précédentes, c'est-à-dire une couronne transparente centrée sur l'axe optique, le reste de l'écran plat 25 étant opaque).

La distance entre l'écran plat 18 et la surface à exposer 19 varie grâce au moteur pas à pas 30. La gestion de cette distance conjointement à l'ouverture du diaphragme 25, en fonction des ordres donnés par l'utilisateur, permet de régler le flou de projection de l'écran plat sur la pellicule.

Les matrices de représentation des images captées, notamment codées en valeur, de luminance et de chrominance ainsi que les matrices obtenues par calcul permettent une segmentation de l'image en régions selon des caractéristiques ainsi mise en évidence.

Après une telle segmentation, l'utilisateur peut sélectionner au moins une région ainsi définie grâce à l'affichage de la segmentation sur l'écran plat 17.

L'inscription d'un texte ou d'une légende en superposition sur l'image enregistrée par la surface photosensible 19 est réalisée grâce à la fonction de génération de caractères du contrôleur d'écran graphique 16. Pour cette inscription ou incrustation il est nécessaire d'éclairer l'écran plat sur lequel sont inscrits des messages en transparence, par la source lumineuse 21.

Bien évidemment, le présent dispositif permet également de superposer ou d'incruster des images, par mise en transparence, au cours d'expositions successives de régions de l'écran plat 18 déterminées par l'utilisateur, et plus généralement de réaliser les fonctions d'un éditeur, en ajoutant, par exemple, des textes, des graphismes ou des messages aux images par incrustation ou superposition.

Le moteur de déplacement et de rotation 51 de la surface photosensible 19 permet de générer des effets de filé de mouvement en cours de prise de vues. De plus, il donne au dispositif le moyen de changer la surface 19 entre deux prises de vues, ou de rembobiner la surface 19 si celle-ci est rembobinable. Le moteur 51 permet le déplacement aussi bien longitudinal, que latéral de la pellicule par rapport à son plan.

La visée électronique, de type vidéo, c'est à dire une visée dans laquelle l'image vue par l'utilisateur est celle captée par le capteur 3 et affichée avec des paramètres d'exposition sur l'écran plat 20 placé dans le viseur, est offerte à l'utilisateur. En cas de faible éclairement la source lumineuse 21 éclaire l'écran plat 20.

En cas d'utilisation d'un flash, on pourra utiliser la matrice des distances pour réaliser une exposition uniforme. En effet, l'éclairement reçu par un objet est inversement proportionnel au carré de la distance de la source lumineuse à l'objet où a lieu une réflexion. En filtrant plus (c'est-à-dire en transmettant moins) les rayons provenant des objets situés à faible distance que ceux provenant d'une réflexion plus lointaine, on uniformise l'effet du flash. Il est à noter qu'une fonction telle que la réduction de contrastes ci-dessus exposée adaptée à une exposition comportant plusieurs éclairs de flash successifs peut remplacer l'utilisation de la matrice des distances faite dans le paragraphe précédent.

Le diaphragme constitué par l'écran plat 25 remplace à la fois un diaphragme classique à une seule ouverture circulaire de diamètre variable, et des masques connus comportant plusieurs ouvertures semi-transparentes ou transparentes. L'utilisateur peut ainsi commander un masquage quelconque de l'image.

Le dispositif selon l'invention permet de sélectionner et d'inscrire manuellement sur l'écran tactile 15 des formes de masques.

Le dispositif selon l'invention permet d'effectuer une solarisation par traitement des histogrammes des luminances et chrominances.

En outre, il permet également par traitement d'images successivement captées, la détection des vitesses de tous les points de l'image. Le déplacement latéral et longitudinal de la pellicule 19 selon la vitesse moyenne mesurée permet de suivre le déplacement de l'appareil de prise de vues ou de l'objet.

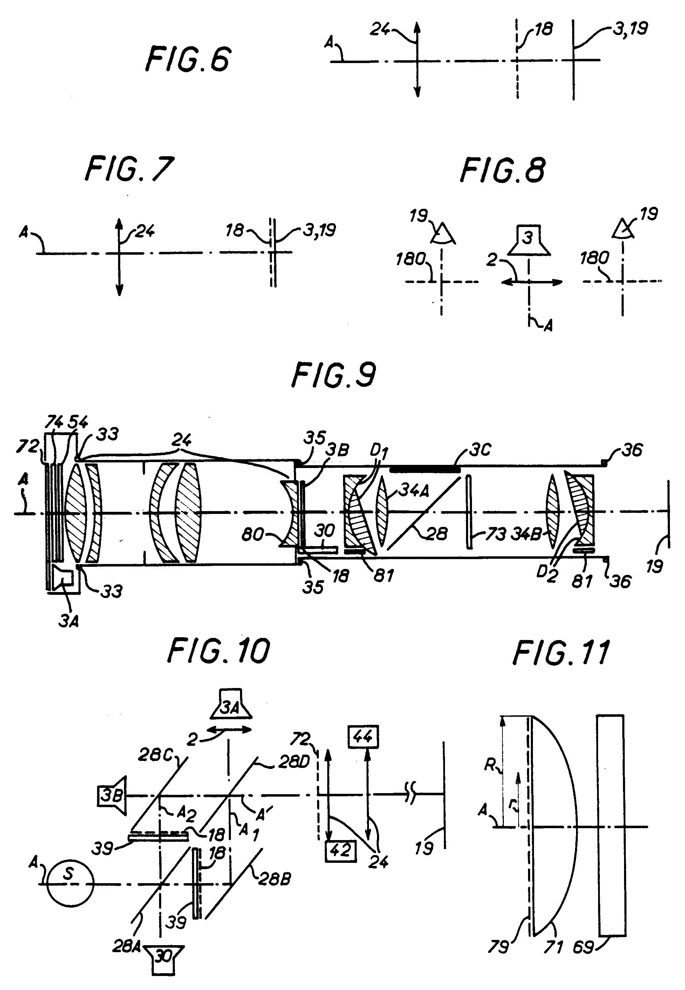

De plus, le dispositif permet par la gestion de l'écran plat 25, certains des traitements d'images exposés figure 9 pour l'écran plat 73.

Le dispositif traite en fait les images, mais aussi les paramètres de la fonction de transfert du système optique et corrige les défauts inhérents au système optique. Cette fonction de transfert peut être non stationnaire, spatialement et temporellement.

Les figures 6 à 8 présentent des variantes dans lesquelles en particulier sont mises en oeuvre des associations ou des fusions d'éléments précités, en référence notamment à la figure 2.

Dans la figure 6 le capteur optique 3 est confondu avec la surface à exposer 19. Cette variante est utilisable dans les appareils de prise de vues dont la surface à exposer 19 génère un signal représentatif de l'image.

Dans la figure.7, le capteur 3 est confondu avec la surface 19 et influence l'écran plat 18. On peut se référer au brevet U.S. 3,724,349 pour la description du fonctionnement d'un tel agencement résumé ci-après.

Le transfert photo-électro-optique du capteur 3 à l'écran plat 18 s'effectue directement, point par point, par influence ou par contact électrique. Les photons incidents créent des charges électriques fixées à la surface de séparation de l'écran plat 18 et du capteur 19 et 3. Le champ électromagnétique généré par ces charges ou par les différences de potentiel influence directement l'état de l'écran plat, point par point, qui lui est le plus proche et par conséquent sa transparence.

Selon l'invention telle que revendiquée l'alimentation électrique sert alors à polariser la jonction point par point et, ainsi, à déclencher le fonctionnement automatique de chaque point. Le dispositif effectue donc un balayage des points de l'écran plat. Ceci permet ainsi une gestion temporelle plus fine de chaque point de la surface 19 adaptée aux modes de fonctionnement ci-dessus décrits.

C'est ainsi à une échelle microscopique, à l'intérieur de chaque point de l'écran 18, que la régulation de l'intensité lumineuse s'effectue. Pour éviter une uniformisation par saturation de l'état de l'écran, un courant de fuite pourra être sauvegardé sur la surface supportant les charges électriques.

En variante, le verre dépoli 10 fait partie intégrante de l'écran plat 20.

En variante, au moins un capteur 3 est placé derrière une surface sensible à impressionner partiellement transparente.

Les écrans plats 25, 18, 20, 17 peuvent en variante être organisés selon un réseau possèdant une symétrie de rotations pour s'adapter avantageusement à la symétrie de rotations de l'objectif 24.

En variante, l'objectif 24 peut être interchangeable et, dans ce cas, ne pas être asservi au dispositif. Une lentille est alors rajoutée dans le boîtier de sorte à permettre les réglages de focale et de distance de mise au point nécessaires au dispositif.

Cette lentille est présentée figure 11. Elle est dans cette variante placée derrière l'objectif et devant le miroir biface 28 et son déplacement selon l'axe optique est asservi par le moteur pas à pas 44 qui sert au réglage de la mise au point. Le diaphragme 25, de type à iris reste en général asservi au boîtier par une baïonnette de connexion entre le boîtier B et l'objectif 24. Le moteur 42 n'existe plus alors.

En variante, le dispositif peut fonctionner en lumière cohérente par emploi d'un dispositif de type connu dit à effet Pockels.

En variante, l'emploi d'un déviateur à dioptre tel que décrit plus loin (figure 9) dont la déviation est asservie au dispositif peut remplacer les fonctions du moteur 51 à l'exception de la fonction de rotation de la surface 19.

En variante, le miroir 28 peut être amovible, le traitement d'image s'effectuant sur la dernière image captée.

En variante, la visée vidéo peut s'effectuer sur l'écran plat 17.

En variante le capteur 3 perçoit une image ayant une erreur de parallaxe. Cette erreur est corrigée par l'utilisation de la matrice des distances.

En variante, deux capteurs perçoivent des images de part et d'autre de l'objectif et une segmentation selon les caractéristiques lumineuses des objets permet de restituer l'image initiale.

En variante, une source lumineuse asservie au dispositif et un moyen de combinaison de son rayonnement avec celui des objets permet en cours de prise de vue une augmentation des éclairements. Un écran plat servant de filtre polychrome reproduisant l'image captée permet ainsi une multiplication des éclairements sans modification des formes des histogrammes de luminance et de chrominance.

En variante, l'exposition lumineuse peut se faire par fente, les composants du dispositif étant adaptés à cette application particulière.

En variante, la mesure des distances peut se faire par émission/réception d'un signal ou par comparaison angulaire des objets dont le rayonnement présente une raie spectrale particulière analysée par diffraction.

Dans la figure 8, l'objectif 2 qui fait partie intégrante du dispositif, forme sur le capteur optique matriciel 3, une image. Deux écrans plats 180 sont placés devant les yeux 19 d'un utilisateur.

Le dispositif obscurcit uniquement les zones où l'intensité lumineuse se dirigeant vers la pupille de l'utilisateur risquerait de l'éblouir et laisse les autres zones parfaitement transparentes.

Cette variante qui est en fait une paire de lunettes protectrices, sert à assurer la sécurité des yeux de certains professionnels comme les soudeurs et à éviter l'éblouissement de nuit, par exemple.

Comme mode de fonctionnement, le dispositif mesure la distance des objets éblouissants et effectue la correction de de l'erreur de parallaxe nécessaire à une bonne position des régions opaques sur la droite allant de l'objet éblouissant à la pupille.

En variante, un détecteur de la position de la pupille peut lui être ajouté pour un positionnement exact des régions de l'écran plat 180 dont la transmission est moindre, sur le trajet optique des rayons éblouissants.

D'autres modes de fonctionnement et variantes apparaîtront dans les modes de réalisation ci-après décrits.

La figure 9 représente une autre application de l'invention à un dispositif adaptable à un système optique tel qu'un objectif, par exemple d'appareil photographique, télescope, microscope, etc..

Ce mode de réalisation peut donc faire partie intégrante d'un appareil de prise de vue, d'un objectif ou en être indépendant mais connectable, au moyen de bagues adaptatrices par exemple. C'est une telle association qui est présentée figure 9 à titre d'exemple non limitatif. La figure 9 ne représente aucun composant électronique et électromécanique, ceci dans un but de simplification. Ces composants sont d'ailleurs analogues à ceux déjà décrits dans le mode de réalisation des figures 3, 4 et 5.

Un objectif 24 ici représenté est connu sous le nom de premier "BIOTAR" de Monsieur Von Rohr, dont les qualités sont connues et qui focalise l'image sur la face arrière de sa dernière lentille 80, qui est une lentille dite de type lentille de Smyth.

Le dispositif comporte, en avant de l'objectif 24, sur l'axe optique A des écrans plats successifs 72, 74 et 54. Sur un axe parallèle à l'axe optique A se trouve derrière une partie de l'écran plat 72 un capteur photosensible 3A. Une bague 33 d'adaptation de type connu le connecte à l'objectif 24.

En arrière de l'objectif 24 lui est connectée par une bague 35 d'adaptation de type connu, par exemple à baïonnette, une seconde partie du dispositif comportant successivement sur l'axe optique un écran plat 18, un capteur 3B, un déviateur D1, une lentille 34A, un miroir incliné semi-réfléchissant 29 qui réfléchit une partie des rayons lumineux vers le capteur 3C, un écran plat 73, une lentille 34B et un déviateur D2. L'écran plat 18 accolé au capteur 3B, les déviateurs D1 et D2 sont respectivement connectés aux moteurs pas à pas 30, 81, 81 asservis au processeur 9 de commande par un circuit 23 d'interface parallèle et par des circuits de pilotage 43. Enfin une bague d'adaptation 36 connecte la seconde partie du dispositif à un système optique connu (non représenté), par exemple un appareil photographique. Les écrans plats 74, 54, 18, 73 et les capteurs 3A et 3C sont de même type que ceux décrits figure 3.

L'écran plat 72 est constitué d'un cristal liquide enfermé entre deux lamelles de verre qui supportent des électrodes transparentes. Son originalité, par rapport aux écrans plats à polariseurs classiques est de n'avoir qu'un seul polariseur arrière.

Le capteur 3B est de type à structure amorphe connu tel que décrit dans le brevet U.S. 3,724,349, mais possède de plus un réseau d'électrodes transparentes parallèles de forme connue pour les écrans à cristaux liquide.

Le groupe de lentilles 34A, 34B est constitué par deux lentilles de même focale assemblées en montage dit 4F. Le plan focal arrière de la lentille 34A et le plan focal avant de la lentille 34B sont confondus.

L'écran plat 54 est situé dans un plan diaphragme de l'objectif 24.

L'écran plat 18 est, en général, en position telle que représentée figure 9, dans le plan de focalisation de l'objectif 24, n'étant déplacé selon l'axe optique A que pour assurer des fonctions particulières.

L'écran plat 18 est d'autre part dans le plan focal avant de la lentille 34A.

L'écran plat 73 est dans le plan focal commun des lentilles 34A et 34B.

Le capteur 3B est accolé à l'écran plat 18.

La surface à exposer est située dans le plan focal arrière de la lentille 34B.

Les déviateurs D1, D2 sont de type connu à deux lentilles sphériques planes sur une face dont les rayons de courbures sont égaux, les lentilles arrière de D1 et avant de D2 étant plan convexe et les lentilles arrière de D2 et avant de D1 étant plan concave, les surfaces sphériques étant constamment en contact sur une partie de leur surface.

Les déviateurs D1 et D2 sont symétriques par rapport au centre de symétrie du montage 4F, ce centre étant le foyer commun des lentilles 34A et 34B.

Les axes des lentilles avant de D2 et arrière de D1 sont asservis au processeur 9 par des moyens 81 d'asservissement électro mécanique de type précité (figure 3).

La partie située en avant de l'objectif 24 du dispositif selon la figure 9 a pour fonction de traiter les rayons lumineux avant leur entrée dans le système optique constitué par cet objectif 24, tandis que la partie du dispositif située derrière l'objectif est dédiée au traitement de la fonction de transfert du système au traitement de l'image et de la transformée de Fourier spatiale de l'image.

Dans la première partie du dispositif située devant l'objectif 24, trois écrans plats numérotés 72, 74 et 54 traitent, tour à tour les rayons lumineux incidents.

L'écran plat 72 a pour fonction de polariser la lumière selon un axe choisi. L'activation d'un élément (pixel) du cristal liquide permet une rotation des axes de polarisation de la lumière incidente, de telle manière que l'axe de polarisation sélectionné corresponde, après cette rotation à l'axe du polariseur arrière et que la lumière polarisée selon cet axe sélectionné traverse l'écran plat. En outre l'écran plat 72 est constitué de deux régions homothétiques dont les états sont également homothétiques, la première région se trouvant dans le champ de l'objectif 24 et la seconde dans le champ d'un capteur 3A.

L'écran plat 74 a pour fonction d'effectuer un filtrage chromatique de l'image, point par point, ou région par région. C'est un écran plat fonctionnant en couleur.

L'écran plat 54 sert de masque à géométrie variable. Il est placé sur un plan diaphragme du système optique. Il peut servir de diaphragme centré, excentré ou multi-ouverture ou encore de masque de forme quelconque. Les pixels de l'écran plat 54 ne présentent aucune action chromatique et n'agissent que sur le facteur de transmission.

La deuxième partie du dispositif, située derrière l'objectif 24 utilise le clavier 11 à écran tactile 15 représenté en figure 5.

Les éléments optiques en sont les suivants : un écran plat 73, deux déviateurs D1 et D2, un écran plat 18, et un groupe de lentilles 34A, 34B placé derrière l'écran plat 18.

L'écran plat 18 a pour fonction de balayer les une après les autres les points de l'image focalisés sur lui par la lentille de Smyth 80. Il sert donc à séparer spatialement et temporellement les rayons traversant le dispositif pour les traiter séparément.

L'écran plat 18 réalise, de plus, toutes les fonctions présentées figure 3.

L'écran plat 73 est placé dans le plan de la transformée de Fourier spatiale de l'image focalisée en 18. Le montage 4F dit encore en double diffraction des lentilles 34A, 34B donne, en effet, la transformée de Fourier spatiale de l'image focalisée en 18 dans le plan focal commun de ces lentilles tout en conjuguant les deux autres plans focaux.

Les écrans plats 54 et 73 peuvent remplir toutes les fonctions de l'écran plat 25 (figure 3). L'objectif 24 ayant une distance de mise au point infinie, l'affichage sur l'écran plat 54 d'une mire et l'analyse de son image captée par un capteur 3B ou 3C permet la mesure des défauts optiques générés par l'objectif 24. En effet, l'écran plat 54 est alors conjugué au capteur 3C et on trouve sa transformée de Fourier sur le capteur 3B, plan de focalisation de l'objectif.

La lentille 34B sert à former sur une surface 19 l'image résultant de la superposition de l'image initiale et du filtrage de cette image dû à son passage à travers les éléments ci-dessus décrits.

Il est à noter que d'autres montages sans lentille ou à objet ou image situé dans un plan frontal d'au moins une lentille fournissent aussi la transformée de Fourier de l'objet.

Le système mécanique 30 sert à déplacer l'écran plat 18 et le capteur 3B longitudinalement, sur l'axe optique du dispositif. Le déplacement longitudinal effectué par l'intermédiaire du système mécanique 30 permet de rendre floue l'image formée sur la surface 19 des contours des pixels de l'écran plat 18.

On trouve dans la figure 9, outre les éléments cités au paragraphe précédent, trois capteurs optiques matriciels 3A, 3B, 3C. L'image de la transformée de Fourier spatiale de l'image initiale est formée sur le capteur matriciel 3C par réflexion sur une lame 28.

La capteur optique 3A reçoit une image transmise après polarisation par l'écran plat 72. Le capteur optique 3B est un capteur amorphe et est en contact avec l'écran plat 18 qu'il influence directement point par point. Le capteur 3C est de type décrit figure 3.

Le déviateur de rayons lumineux D1 à lentilles sphériques permet de dévier les rayons vers l'axe optique du dispositif pour en effectuer un meilleur traitement. Le deuxième déviateur D2, symétrique du premier dans le montage symétrique 4F, permet de balayer la surface 19 de façon symétrique par la symétrie centrale du montage 4F, du balayage de l'écran plat 18 par le déviateur D1. La réalisation de cette fonction s'effectue grâce aux asservissements du déviateur au dispositif selon l'invention, par des moyens électromécaniques 81, de même type que ceux déjà présentés.

Les bagues d'adaptation 33, 35 et 36 peuvent être solidaires ou indépendantes du dispositif. Elles permettent l'accouplement de chacune des parties du dispositif à l'objectif 24 et éventuellement à un autre système optique.

Le fonctionnement de la première partie du dispositif s'effectue selon les ordres entrés par l'utilisateur sur le clavier (non représenté).

La première partie du dispositif possède tous les composants nécessaires pour effectuer tous les filtrages, marquages et polarisations actuellement réalisés par des filtres de type connu, par exemple de la marque "COKIN".

Le mode de fonctionnement correspondant à la réalisation de ces filtres et masques par la première partie du dispositif n'est pas détaillée ici, étant connus en soi.

Le fonctionnement de la première partie en amplificateur de contraste s'effectue de la même manière que précédemment décrit par variation du facteur de transmission de chaque région de l'écran plat 74, en fonction de l'éclairement reçu par la région correspondante du capteur 3A.

La détection de l'axe de polarisation de la lumière incidente véhiculant un éclairement maximal se fait par mesure de l'éclairement reçu par le capteur 3A en fonction d'un angle de rotation autour de l'axe optique A de l'axe de polarisation sélectionné par l'écran plat 72.

D'une manière générale, la lumière provenant du ciel est majoritairement polarisée selon un axe, tandis que celle provenant de réflexions de cette lumière sur des objets, présente des axes de polarisation majeurs différents. Cette fonction de la première partie du dispositif permet de traiter séparément ces axes de polarisation.

Par exemple, si les écrans plats 72, 74 et 54 et le capteur 3A ne possèdent que deux régions, la première partie du dispositif constitue un filtre bichromique dont chaque moitié est instantanément modifiable en intensité, en couleur et en polarisation. Cette partie du dispositf peut être utilisée indépendamment, par exemple avec des objectifs à miroir qui ne possèdent pas de diaphragme, ou pour les projecteurs pour corriger l'effet chromatique de vieillissement des supports chimiques.

Le fonctionnement de la deuxième partie du dispositif est décrit ci-après.

Une fonction particulière, appelée fonction contour est générée par influence du capteur 3B sur l'écran plat 18. La différence de potentiels entre deux éléments voisins de la surface du capteur 3B modifie l'état de l'élément d'écran plat en regard de leur frontière commune et accentue ou réduit donc les contours de l'image formée sur l'écran plat 18.

La fonction générale de la deuxième partie du dispositif est de traiter la transformée de Fourier spatiale de l'image traversant l'écran plat 18 situé dans le plan de l'hologramme de Fourier l'écran plat 73 peut par exemple prendre la forme d'un filtre passe-haut, c'est à dire transparent autour d'un cercle opaque central, passe-bas, c'est à dire opaque autour d'un cercle transparent central, ou basse-bande, combinaison des deux états précités.

Un balayage successif des points de l'écran plat 18, par ouverture successive des points correspondants, corrélativement à l'état de filtre fréquentiel centré sur le point correspondant de l'écran plat 73, provoque un traitement d'image région par région. Ce balayage s'effectue corrélativement au balayage de l'écran plat 18 effectué par l'axe du déviateur D1 permettant un meilleur traitement.

Une fonction particulière de cette seconde partie du dispositif est la restauration d'image. En effet, les images prises souffrent souvent de défauts de flou de mouvements, de flou de focalisation ou de bruits. L'analyse et le traitement de la transformée de Fourier spatiale de l'image ou de ses éléments pris séparément permet les corrections du bruit, du flou de focalisation et du flou de mouvement. En effet, pour pallier chacun de ses défauts une analyse et une correction simple de la transformée de Fourier suffit.

Les traitements d'image s'effectuant sur l'hologramme de Fourier sont connus et constituent par exemple des filtres adaptés, arêtes de Foucault, filtre de phase, filtre de Foucault-Hilbert, filtre dérivateur, filtre intégrateur, des fonctions de tramage, amélioration de contrastes, multiplexage, déflouage, reconnaissance des formes par corrélation optique, contrôle non destructif, épandage, filtrage, codage, compression d'image et des convolutions, corrélation et autocorrélations. On pourra se référer valablement aux livres "Optical Information Processing" John Wiley & Sons éditeurs et "Traitement optique du signal et des images" Cepadues Editions.

L'avantage du traitement d'image par le dispositif tient en ce que ce traitement peut s'effectuer automatiquement et s'adapter à l'image transmise.

En particulier, un signal transmis à l'écran plat 73 peut être calculé à partir de la transformée de Fourier de l'image, et permettre des autocorrélations, et des rotations de l'image transmise, le signal transmis correspondant à une translation de la transformée de Fourier.

Les positions respectives de l'écran plat 18 et du capteur optique matriciel 3B sur le trajet optique des rayons lumineux peuvent être différentes. En effet, l'écran plat 18 peut se trouver devant ou derrière le capteur 3B. Dans le deuxième cas, figure 9, le capteur reçoit l'image résultant du filtrage dû à l'état de l'écran plat 18 et l'influence de 3B sur 18 se fait par boucle d'asservissement. De même les positions respectives des écrans 73 et 72, 74 et 54 par rapport aux capteurs 3C, 3A peuvent être inversées.

L'utilisation d'une rotation effectuée par corrélation sur l'écran plat 73 et des déviateurs D1, D2, permet de générer des mouvements de l'image de toutes sortes et en particulier de réaliser les fonctions du moteur 51 (figure 3)

Les fonctions de l'application du dispositif à un appareil de prise de vue (figure 3) sont toutes possibles avec l'application ici décrite, l'écran plat 18 ayant une position analogue à celle précédemment décrite (figure 3) et les écrans plats 54 et/ou 73 ayant des positions analogues à l'écran plat 25 (figure 3).

En variante, les bagues d'adaptation 33, 35 et 36 transmettent des informations codées par exemple sous forme électrique, mécanique, etc ...

En variante, le capteur 3B est réparti aux noeuds du réseau de l'écran plat 18 sous forme de phototransistors, photodiodes ou de transitors dont on exploite l'effet photoélectrique.

En variante deux capteurs 3B peuvent se succéder sur l'axe optique A, la comparaison des images respectivement captées fournissant une matrice de distance des objets.

En variante les capteurs 3A, B, C peuvent se trouver en dehors du champ utile du dispositif optique, par exemple, devant les parties constamment opaques d'un diaphragme.

En variante l'écran plat 73 est de type actif pour modifier la transformée de Fourier de l'image en lui ajoutant des pixels clairs, ou pour augmenter les luminances sans modifier les chrominances.

En variante, tous les composants placés sur le trajet optique des rayons lumineux, écrans plats compris, peuvent être escamotables grâce à des dispositifs mécaniques ou électromécaniques.

En variante, ces dispositifs ou systèmes mécaniques ou électromécaniques peuvent asservir longitudinalement, sur l'axe optique du dispositif, les positions des différents écrans plats.

En variante, le capteur 3A peut être avantageusement muni d'un moyen de détection de l'horizon réalisé par traitement des histogrammes d'au moins deux lignes perpendiculaires d'éléments photosensibles, de sorte à définir deux zones de traitement séparées, une pour le ciel, une pour le sol, par exemple. D'autres moyens de détection de type connu de l'horizon pourront réaliser une fonction analogue.

D'autres modes de fonctionnement et variantes apparaîtront dans les modes de réalisation ci-après décrits.

La figure 10 représente une application de l'invention à un système de restitution d'images ou dans un appareil de projection. Pour une plus grande clarté de la figure, la plupart des éléments mécaniques, electromécaniques et électroniques a été omis, étant d'ailleurs analogues à ceux précédemment décrits. De même, des composants optiques classiques des projecteurs de diapositives comme par exemple un verre dépoli, un filtre anticalorique, un miroir et un dioptre condenseur sont englobés dans le terme de source lumineuse.

Cette application comporte les éléments optiques suivants, placés selon des axes optiques A, A1, A2, A' conjugués. Une source lumineuse S, un miroir semi-réfléchissant de séparation polarisant 28A, deux diapositives 39, deux écrans plats 18, deux miroirs semi-réfléchissants de réflexion polarisants 28C et 28B, un miroir semi-réfléchissant de combinaison 28D, un écran plat 72 de même type que l'écran plat 73 précédemment décrit (figure 9), le polariseur de cet écran plat étant derrière le cristal liquide, et un objectif 24. Les miroirs 28A,B,C,D sont inclinés de telle manière qu'un rayon incident selon l'axe optique A se refléchissent à angle droit par rapport à cet axe optique. Les axes optiques A, A1,A2, A' sont conjugués par les miroirs 28B, A,C,D, respectivement. La focale et la distance de mise au point de l'objectif sont respectivement asservis par les moteurs pas à pas 42 et 44. Des capteurs 3A, 3B et 3C sont placés sur l'axe optique A1, A' et A'$_2$, une lentille 2 formant sur le capteur 3A une image de l'objet constituée des diapositives 39 telles que transmises par les écrans plats 18. Le nombre d'écrans plats 18 n'est pas limité et correspond au nombre de vues que l'on désire restituer simultanément. Deux de ces vues ont été schématisées ici. Dans la suite de la description on appellera projecteur les appareils de restitution d'images et les projecteurs.

Un mélangeur d'images a pour fonction de méler des images de manière à ce qu'elles soient projetées par le même objectif sur la même région de la surface à éclairer.

Le mélangeur d'images selon ce mode de réalisation comporte quatre miroirs 28 A, B, C, D, plans parallèles semi-réfléchissants polarisants tels que des miroirs anti-retour, ces miroirs ont la propriété d'être traversés par des rayons lumineux selon un axe de polarisation et de réfléchir des rayons lumineux polarisés selon un axe de polarisation perpendiculaire au premier. Les deux images ou vues 39 à projeter conjointement ont des polarisations perpendiculaires et sont séparées point par point par un écran plat polariseur 72, placé soit derrière l'objectif 24 (non représenté), soit devant les yeux d'un spectateur (non représenté), soit devant l'objectif 24 (figure 11).

Le capteur 3A reçoit l'image des transmittances 39 et des écrans plats 18 avant leur sortie du projecteur, étant conjugué avec eux par la lentille 2.

Le capteur 3B reçoit l'image en retour de l'écran 19, auquel il est conjugué par l'objectif 24.

Le capteur 3C reçoit l'image en retour de l'écran 19 après un second passage à travers les transmittances 39.

Les axes de polarisation de réflexion des miroirs 28 A, B, C, D sont orientés de telle manière que la majeure partie des rayons issus de la source S arrive sur l'écran plat 72, quand les écrans plats 18 sont au repos.

Cependant les miroirs 28 A, B, C, D ont des axes de polarisation de réflexion légèrement décalés de manière à ce qu'une partie des rayons lumineux qui les traverse soit dirigée vers les capteurs 3A, 3B, 3C.

Les capteurs 3B et 3C permettent une mise au point automatisée par un programme d'optimisation approprié. Notamment on démontre mathématiquement que le maximum d'éclairement global perçu par le capteur 3C correspond à la conjuguaison optique des objets 39 avec l'écran de projection.

Un asservissement 44 de la mise au point et 42 de la distance focale sont connectés au dispositif.

Comme mode de fonctionnement non commun aux autres modes de réalisation du dispositif, il y a l'avantage de ne pas devoir éteindre la source lumineuse S au cours du changement de vues, ni au cours des fondus enchaînés. En outre de nouveaux fondus enchaînés spatiaux pourront être générés en obscurcissant des régions d'un écran plat associé à une image alors que les régions corrspondantes sont éclaircies sur l'autre écran plat. La polarisation de la lumière créée par le mélangeur est utilisée en vision en relief, les diapositives 39 ayant alors été prises par un dispositif stéréoscopique.

Comme autre mode de fonctionnement, les écrans plats 18 peuvent représenter une mire dont une image est perçue par un capteur 3, puis analysée de telle manière que les défauts optiques du système optique sont mémorisés par le dispositif. Au cours du transfert d'un image, les écrans plats 18 prennent un état tel qu'il corrige une partie de ces défauts, notamment, pour uniformiser l'éclairement sur la surface 19.

D'autres modes de fonctionnement commun avec ceux des modes de réalisation précédemment décrits ne sont pas répétés ici. Il faut cependant noter que les écrans plats 18 pourront générer les mêmes fonctions que précédemment et que l'écran plat 72 pourra permettre des fonctions des écrans plats 25 (figure 3) 74, 54, 73 (figure 9).

En variante, le clavier 11 contient une entrée de messages codés sur la bande sonore qui commande ordinairement les projecteurs de diapositives.

En variante, la source S peut être un laser associé ou non à une lentille. Dans ce cas l'objectif 24 peut être supprimé.

En variante, le mélangeur d'image peut être constitué d'un prisme de type connu.

En variante, il est possible de réaliser un écran plat constitué d'une pluralité de mélangeurs, à miroirs semi-réfléchissants polarisants permettant la décomposition selon les axes de polarisation puis le mélange d'images pixel par pixel.

La figure 11 représente une lentille 71 accolée à un écran plat 70 et une lame 69 à chemin optique variable. La lentille 71 est telle que chaque rayon r, variable entre O et R, définit un cercle sur le disque convexe de la lentille 71 centré sur l'axe optique, dont la distance focale dépend de r, à la différence des lentilles ordinaires.

La lame 69 est, par exemple, à cristaux piezzoélectriques et constituée d'un composant de type connu dont l'indice varie en fonction des contraintes qui lui sont appliquées.

En sélectionnant, grâce à l'écran plat 70, le cercle de rayons r, le dispositif sélectionne une distance focale de la lentille. La lame 69 permet en modulant le chemin optique des rayons qui la traversent en fonction de r, de déplacer le point de focalisation sans modifier la distance focale. Ainsi, il n'est pas nécessaire de déplacer la lentille 71, pour effectuer la mise au point.

En variante, la lentille 71 peut être une lentille de Fresnel. Dans ce cas la lame 69 a un chemin optique constant en regard de chaque élément de la lentille de Fresnel d'une valeur telle que les points de focalisation soient confondus.

En variante, la lentille 71 peut être remplacée par un miroir ayant les mêmes propriétés de focales variables en fonction de la distance à l'axe optique, ou tout dispositif analogue.

De même, il est possible en utilisant des lames à indice globalement variable de même type que la lame 69 constituant des écrans plats de réaliser une association de lames qui en fonction des indices est soit réfléchissante (miroir) soit transmissive réalisant des interférences constructives ou destructives.

Il est à noter que chacun des écrans plats décrits dans les modes de réalisation précédents, peut être remplacé par l'un quelconque des autres écrans plats et en particulier être de type actif.

Notamment le dispositif représenté à la figure 11, ou ses variantes, peut être adapté aux trois modes de réalisation de l'invention. Il en est de même pour le mélangeur d'images (figure 10) et l'écran plat mélangeur.

Lorsqu'une vue prise grâce au dispositif selon le premier mode de réalisation et ceci en réduisant ses contrastes, est projetée par un dispositif tel que celui décrit en référence à la figure 10, et ceci en augmentant les contrastes, on obtient une fonction du type compandeur, fonctionnant sur les contrastes.

Bien entendu, une fonction commune aux trois modes de réalisation est la coloration d'images monochromes.

En variante, l'utilisation de dioptres plan devant l'objectif permet le transfert d'une image d'une mire selon des modes connus.

Des tests initiaux permettent de mémoriser, pour les trois modes de réalisation, les défauts propres au système optique et de les corriger systématiquement.

Bien entendu, les écrans plats peuvent être positionnés sur tous les plans particuliers du système optique comme par exemple les plans nodaux, antinodaux, principaux, antiprincipaux, diaphragme de champ et diaphragme d'ouverture, etc... de sorte à utiliser les propriétés particulières de ces plans.

En outre, les écrans plats ci-dessus décrits peuvent recevoir sur un support (ou codage) non lumineux, mais physique et notamment électrique, une image de type vidéo perçue, analysée et modifiée par le dispositif pour réaliser, par exemple une T.V. à correction automatique de défauts optiques ou un masque servant à la génération de circuits intégrés.

Il est à noter que si l'on place un écran plat transmissif devant le support d'un hologramme, on peut alors effectuer les mêmes modifications sur cet hologramme que sur une image quelconque.

Il est à noter que toute combinaison des composants et/ou des fonctions des applications présentées sont conformes à l'invention telle que revendiquée.

**Revendications**

1. Dispositif de traitement de l'image d'un objet (O), comportant au moins un capteur d'image (3) organisé selon un premier réseau de points d'image ou pixels, un écran plat (18,20,25,180) de transfert d'image, organisé selon un second réseau de points d'image et un calculateur (5,9) adapté à générer en fonction d'un signal en provenance du capteur (3) un signal de commande d'état pour chaque pixel de l'écran plat (18,20,25,180), ledit capteur d'image (3) et ledit écran plat (18,20,25,180) recevant simultanément la lumière en provenance de l'objet (O), caractérisé en ce que l'image résultant (I) de la transmission de l'image de l'objet (0) à travers l'écran plat ne soit formée que de rayons lumineux issus de l'objet (O), et modulés par des états de transmittance des pixels dudit écran plat.

2. Dispositif selon la revendication 1, caractérisé en ce que ledit calculateur (5,9) comporte une unité de traitement des contrastes de l'image de l'objet (O), de sorte que l'image résultante (I) présente des contrastes différents de ceux de l'image reçue par l'écran plat (18,20,25,180).

3. Dispositif selon l'une quelconque des revendications précédentes, caractérisé en ce qu'au moins un écran plat (18,20) est placé dans ou près d'un plan de focalisation du dispositif.

4. Dispositif selon l'une quelconque des revendications précédentes, caractérisé en ce qu'au moins un écran plat (25) est placé dans, ou près d'un plan diaphragme du dispositif et est adapté à faire varier au moins un paramètre uniforme de transfert parmi la durée d'exposition, la profondeur de champ, l'éclairement moyen transmis, les fréquences spatiales transmises, et l'ouverture.

5. Dispositif selon l'une quelconque des revendications précédentes, caractérisé en ce qu'il fait partie intégrante d'un appareil de prise de vue (B), muni d'une surface photosensible (19).

6. Dispositif selon la revendication 5, caractérisé en ce que la surface photosensible (19) est destinée à recevoir l'image résultante (I) et est confondue avec le capteur (3).

7. Dispositif selon l'une quelconque des revendications 1 à 4, caractérisé en ce qu'il fait partie intégrante d'une paire de lunettes de protection et en ce qu'au moins deux écrans plats (180) sont placés à l'emplacement de verres de lunettes.

8. Dispositif selon l'une quelconque des revendications 1 à 6, caractérisé en ce qu'il est associé à un objectif (24).

9. Dispositif selon l'une quelconque des revendications précédentes, caractérisé en ce qu'il comporte au moins un écran plat (72) adapté à faire varier un axe de polarisation d'une lumière transmise, et en ce que le calculateur (5, 9) comprend un moyen de détection de la polarisation.

10. Dispositif selon la revendication 7, caractérisé en ce que le capteur d'image (3) est apte à générer en réponse aux photons incidents un champ électro-magnétique, qui influence l'état de l'écran plat (18) à l'intérieur de chaque point du second réseau.

**Claims**

1. A device for processing the image of an object (O) comprising at least one image sensor (3) arranged as a first network of image points, or pixels, a flat image transfer screen (18, 20, 25, 180) arranged as a second network of image points, and a computer (5, 9) adapted to elaborate for each pixel of the flat screen (18, 20, 25, 180) a state control signal depending on a signal originating from the sensor (3), the said image sensor (3) and the said flat screen (18, 20, 25, 180) receiving the light coming from the object (O) simultaneously, characterized in that the image (I) resulting from the transmission of the image of the object (O) through the flat screen (18) is formed only of light rays coming from the object (O) and modulated by the transmittance states of the pixels of the said flat screen.

2. A device according to claim 1, characterized in that the said computer (5, 9) comprises a unit for processing the contrasts of the image of the object (O) so that the resultant image (I) shows contrasts different to those received by the flat screen (18, 20, 25, 180).

3. A device according to any one of the preceding claims, characterized in that at least one flat screen (18, 20) is located in or near a focusing plane of the device.

4. A device according to any one of the preceding claims, characterized in that at least one flat screen (25) is located in or near a diaphragm plane of the device and is adapted to vary at least one of the following uniform transfer parameters; the exposure duration, the depth of field, the average illumination transmitted, the spatial frequencies transmitted, and the opening.

5. A device according to any one of the preceding claims, characterized in that it forms an integral part of an image capture apparatus (B) provided with a photo-sensitive surface (19).

6. A device according to claim 5, characterized in that the photosensitive surface (19) is designed to receive the resultant image (I) and is coincident with the sensor (3).

7. A device according to any one of claims 1 to 4, characterized in that it forms an integral part of a pair of protective spectacles and in that at least two flat screens (180) are installed at the location of the spectacle lenses.

8. A device according to any one of claims 1 to 6, characterized in that it is associated with an objective lens (24).

9. A device according to any one of the preceding claims, characterized in that it comprises at least one flat screen (72) adapted to vary a polarization axis of a transmitted light and in that the computer (5, 9) comprises a means for detecting the polarization.

10. A device according to claim 7, characterized in that the image sensor (3) is adapted to generate, in response to incident photons, an electromagnetic field which affects the state of the flat screen (18) inside each point of the second network.

**Patentansprüche**

1. Vorrichtung zur Verarbeitung des Bildes eines Gegenstands (o) mit mindestens einer Bildaufnahmevorrichtung (3), die nach einem ersten Bildpunktenetz oder Pixelmuster geordnet ist, einem optischen Flächenelement (18, 20, 25, 180) zur Bildübertragung, das nach einem zweiten Bildpunktenetz geordnet ist, und einem Rechner (5, 9), der auf Grund eines von der Aufnahmevorrichtung (3) ausgehenden Signals ein Befehlssignal für jedes Pixel des optischen Flächenelements (18, 20, 25, 180) erzeugt, wobei die Bildaufnahmevorrichtung (3) und das optische Flächenelement (18, 20, 25, 180) das vom Gegenstand (o) kommende Licht gleichzeitig empfangen, dadurch gekennzeichnet, daß das aus der Übertragung des Bildes des Gegenstands (o) durch das optische Flächenelement hindurch entstehende Bild (I) nur aus vom Gegenstand (o) ausgehenden Lichtstrahlen gebildet wird, die durch die Lichtdurchlaßgrade der Pixel des optischen Flächenelements moduliert werden.

2. Vorrichtung nach Anspruch 1, dadurch gekennzeichnet, daß der Rechner (5, 9) eine Einheit zur Verarbeitung der Bildkontraste des Gegenstands (o) aufweist, so daß sich die Kontraste des entstehenden Bildes (I) von den Kontrasten des vom optischen Flächenelement (18, 20, 25, 180) empfangenen Bildes unterscheiden.

3. Vorrichtung nach einem der vorhergehenden Ansprüche, dadurch gekennzeichnet, daß mindestens ein optisches Flächenelement (18, 20) in oder in der Nähe einer Brennebene der Vorrichtung angeordnet ist.

4. Vorrichtung nach einem der vorhergehenden Ansprüche, dadurch gekennzeichnet, daß mindestens ein optisches Flächenelement (25) in oder in der Nähe einer Blendenebene der Vorrichtung angeordnet ist und zur Variation mindestens eines einheitlichen Bildübertragungsparameters wie Belichtungszeit, Bildtiefe, übertragene durchschnittliche Beleuchtungsstärke, übertragene Raumfrequenzen und Blendenöffnung geeignet ist.

5. Vorrichtung nach einem der vorhergehenden Ansprüche, dadurch gekennzeichnet, daß sie Teil eines Bildaufnahmegerätes (B) mit einer photosensiblen Oberfläche (19) ist.

6. Vorrichtung nach Anspruch 5, dadurch gekennzeichnet, daß die photosensible Oberfläche (19) dazu bestimmt ist, das entstehende Bild (I) zu empfangen und mit der Aufnahmevorrichtung (3) verbunden ist.

7. Vorrichtung nach einem der Ansprüche 1 bis 4, dadurch gekennzeichnet, daß sie Teil einer Schutzbrille ist, und daß mindestens zwei optische Flächenelemente (180) am Ort der Brillengläser angeordnet sind.

**8.** Vorrichtung nach einem der Ansprüche 1 bis 6, dadurch gekennzeichnet, daß sie mit einem Objektiv (24) verbunden ist.

**9.** Vorrichtung nach einem der vorhergehenden Ansprüche, dadurch gekennzeichnet, daß sie mindestens ein optisches Flächenelement (72) aufweist, das zur Variation einer Polarisationsachse des hindurchgelassenen Lichts geeignet ist, und daß der Rechner (5, 9) eine Vorrichtung zur Ermittlung der Polarisation aufweist.

**10.** Vorrichtung nach Anspruch 7, dadurch gekennzeichnet, daß die Bildaufnahmevorrichtung (3) geeignet ist, in Reaktion auf die einfallenden Photonen ein elektromagnetisches Feld zu erzeugen, das den Zustand des optischen Flächenelements (18) innerhalb jedes Punkts des zweiten Netzes beeinflußt.

FIG.1

FIG.2

FIG.3

EP 0 256 051 B1

## FIG.4

## FIG. 5

FIG.6

FIG.7

FIG.8

FIG.9

FIG.10

FIG.11